# FASCICULE DE BREVET EUROPEEN

(11) **EP 2 829 746 B1**
(45) Date de publication et mention de la délivrance du brevet: **08.03.2017**
(21) Numéro de dépôt: 14178194.8
(22) Date de dépôt: 23.07.2014
(51) Int. Cl.: F16B 12/20

(54) **Ensemble de montage pour la fabrication des ceintures de tiroirs**
Montageeinheit für die Herstellung von Schubladenrahmen
Mounting assembly for the manufacture of drawers frames

(30) Priorité: 24.07.2013 FR 1357316
(43) Date de publication de la demande: 28.01.2015
(73) Titulaire: Meubles Demeyere, 59840 Pérenchies (FR)
(72) Inventeur: Delecroix, Didier, 59890 Deulemont (FR)
(74) Mandataire: Balesta, Pierre

(56) Documents cités:
- DE-A1-102006 049 611
- DE-B3-102010 010 787

## Description

La présente invention concerne le domaine des systèmes d'assemblage de plaques ou panneaux.

Elle concerne plus particulièrement les ensembles de montage de panneaux tels que les panneaux constitués de bois, de particules de bois, de MDF, ou tout autre type de matériau équivalent.

Le document DE102010010787B3 divulgue un ensemble de montage entre deux panneaux perpendiculaires.

Encore plus spécifiquement, l'invention porte sur un ensemble de montage comprenant :
- au moins une première plaque munie d'au moins une première tige qui fait saillie perpendiculairement à une des deux grandes faces de ladite première plaque ;
- au moins une deuxième plaque présentant une direction longitudinale et étant configurée pour être fixée perpendiculairement à la première plaque, ladite deuxième plaque comportant au moins un logement recevant la première tige lorsque la deuxième plaque est fixée à la première plaque.

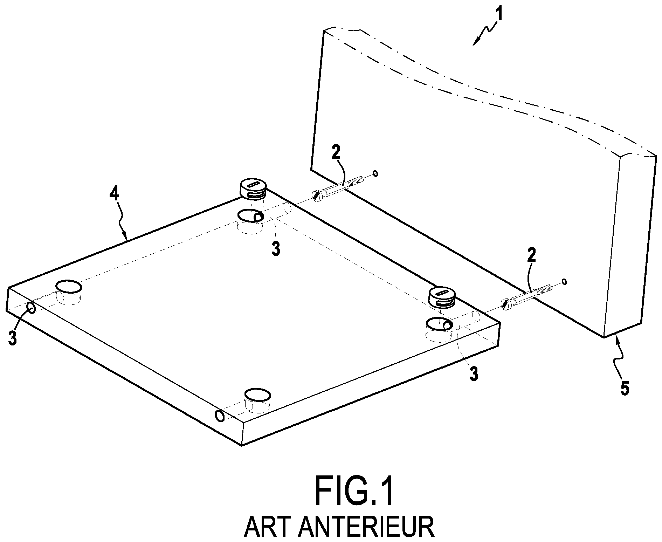

Un tel ensemble de montage 1 de l'art antérieur est illustré sur en figure 1.

Traditionnellement, la première tige 2 est constituée d'un goujon, tandis que le logement 3 consiste en un perçage dans lequel le goujon vient s'introduire. Dans l'ensemble de montage 1 de l'art antérieur, le perçage est réalisé dans l'épaisseur de la deuxième plaque 4 et débouche dans le bord transversal de la deuxième plaque 4 qui vient au contact de la première plaque 5. Dit autrement, le perçage est réalisé dans un bord de la deuxième plaque qui est parallèle à la première plaque.

On comprend que la première tige fait saillie perpendiculairement par rapport au plan défini par la face de la première plaque contre laquelle la deuxième plaque est en contact lorsque les première et deuxième plaques sont fixées l'une à l'autre.

On comprend également que la fixation des première et deuxième plaques est telle que lorsque les première et deuxième plaques sont fixées l'une à l'autre, elles définissent deux plans perpendiculaires l'un à l'autre.

En d'autres termes, lorsque les première et deuxième plaques sont fixées l'une à l'autre, elles définissent une forme de L.

On comprend également qu'il est nécessaire de réaliser autant de perçages qu'il existe de goujons. En outre, les perçages sont nécessairement réalisés après l'usinage des plaques.

Aussi, la fabrication d'un tel ensemble de montage est contraignante d'un point de vue technique et économique.

### Objet et résumé de l'invention

Un but de la présente invention est de remédier aux inconvénients précités en proposant un ensemble de montage qui soit plus simple et rapide à fabriquer.

L'invention atteint son but par le fait que le logement est constitué d'une rainure s'étendant selon la direction longitudinale de la deuxième plaque.

Au sens de l'invention, par rainure, on entend une entaille débouchante selon sa longueur.

On comprend que, pour fixer les première et deuxième plaques l'une à l'autre, l'une des plaques est déplacée selon la direction longitudinale de la deuxième plaque, de manière à engager et coulisser la première tige dans la rainure.

Ainsi, le perçage réalisé dans l'épaisseur de la deuxième plaque est remplacé par une rainure longitudinale. Cette rainure longitudinale est débouchante le long de sa longueur.

En outre, on comprend que, contrairement à l'art antérieur, la rainure longitudinale est réalisée dans une face de la deuxième plaque qui est transversale par rapport la première plaque.

Aussi, la rainure débouche dans le bord de la deuxième plaque destiné à venir au contact de la première plaque, et dans une autre face de la deuxième plaque qui est transversale, de préférence perpendiculaire, à la première plaque.

Par « transversal », on entend donc « perpendiculaire » ou « incliné ».

En d'autres termes, la rainure est conformée de manière qu'elle débouche dans une face de la deuxième plaque qui définit un plan qui est transversal, de préférence perpendiculaire, au plan défini par la première plaque, et plus particulièrement au plan défini par la face de la première plaque contre laquelle la deuxième plaque est en contact, lorsque les première et deuxième plaques sont fixées l'une à l'autre.

Si la rainure peut s'étendre uniquement sur une fraction de la longueur de la deuxième plaque, selon un mode de réalisation préférentiel, la rainure s'étend sur toute la longueur de la deuxième plaque.

Cette variante est particulièrement avantageuse dans la mesure où une même rainure peut servir de logement pour deux tiges fixées à deux premières plaques disposées de part et d'autre de la deuxième plaque. On raccourcit ainsi le délai de réalisation des logements. On comprend par conséquent, qu'en réalisant deux rainures, on forme quatre logements pour les tiges, ce qui est le plus souvent suffisant pour fixer solidement quatre plaques entre elles, par exemple pour former une ceinture de tiroir.

De préférence, la section transversale de la rainure est sensiblement égale ou légèrement plus grande que la section transversale de la première tige.

Selon une variante, la section transversale peut être légèrement plus petite que la section transversale de la première tige afin de réaliser un montage en force.

Selon un premier exemple de réalisation, la section transversale de la rainure est rectangulaire.

Afin d'améliorer le maintien de la première tige dans la rainure, la section transversale de la rainure présente avantageusement au moins deux pans inclinés convergents vers l'extérieur de la deuxième plaque de manière à réaliser un blocage transversal de la première tige.

De préférence, la section transversale de la rainure présente une forme pentagonale.

Un intérêt de cette forme est de pouvoir être usinée facilement. Dans une certaine mesure, elle permet également d'améliorer le maintien de la première tige dans la rainure.

Selon un mode de réalisation préféré, la première tige est un goujon, et la deuxième plaque est munie d'un moyen pour recevoir et verrouiller une extrémité du goujon afin de réaliser un blocage de la deuxième plaque par rapport à la première plaque selon la direction longitudinale.

Selon une variante, la première tige est un tourillon. Dans ce cas, on pourra prévoir de coller le tourillon dans la rainure.

De manière avantageuse, la deuxième plaque présente une première face, une seconde face opposée à la première face, et au moins un bord longitudinal, et la rainure est usinée dans la première face, la seconde face et/ou le bord longitudinal.

On comprend que la rainure débouche dans le bord transversal, perpendiculaire au bord longitudinal, afin de permettre l'engagement de la première tige dans la rainure.

De manière préférentielle, mais non nécessairement, la première face, la seconde face ou le bord longitudinal dans lequel est usinée la rainure est recouvert d'un parement décoratif. Il pourra s'agir par exemple d'un placage, d'un enrobage, ou tout autre revêtement rendant l'ensemble de montage plus esthétique.

Selon un mode de réalisation préférentiel, la première plaque est munie en outre d'une deuxième tige, et la première plaque présente deux rainures dans lesquelles sont engagées les première et deuxième tiges.

On comprend que l'utilisation de deux tiges a pour effet d'améliorer la solidarisation de la première plaque à la deuxième plaque.

Avantageusement, la deuxième plaque comporte en outre au moins un trou débouchant dans ladite rainure afin de recevoir un moyen de verrouillage de la première tige. Le moyen de verrouillage est par exemple une pièce cylindrique, communément appelé excentrique, qui coopère avec une extrémité de la tige afin de réaliser le verrouillage.

Alternativement, le moyen de verrouillage peut comporter un matériau adhésif, tel que de la colle, disposé dans la rainure formée dans la deuxième plaque et qui reçoit et verrouille une extrémité de la tige, par exemple une extrémité d'un tourillon, afin de réaliser le blocage de la deuxième plaque par rapport à la première plaque selon la direction longitudinale.

L'invention porte en outre sur une ceinture de tiroir comportant un ensemble de montage selon l'invention. La ceinture de tiroir comporte de préférence une paire de premières plaques, et une paire de deuxièmes plaques. Préférentiellement, les premières plaques constituent la façade et la partie arrière du tiroir, tandis que les deuxièmes plaques constituent les flancs du tiroir. La ceinture de tiroir selon l'invention est préférentiellement complétée d'un fond afin de former un tiroir.

L'invention concerne en outre un procédé de fabrication d'un ensemble de montage selon l'invention, dans lequel, pour fabriquer la deuxième plaque, on procède de la façon suivante :
- on fournit un panneau s'étendant selon une direction longitudinale ;
- on usine dans le panneau au moins une rainure s'étendant selon la direction longitudinale dudit panneau;
- on réalise au moins une découpe transversale du panneau usiné afin d'obtenir la deuxième plaque.

On comprend que le procédé permet de fabriquer très rapidement une, et de préférence une série de deuxièmes plaques munies de logements pour recevoir les tiges.

Avantageusement, on usine en outre au moins un trou dans l'une des faces de la deuxième plaque, ledit trou débouchant dans ladite rainure afin de recevoir un moyen de verrouillage de la première tige.

Avantageusement, la rainure est usinée dans l'une des faces de la deuxième plaque, ou bien dans l'un des bords longitudinaux de ladite deuxième plaque.

L'invention concerne enfin un procédé de fabrication d'une ceinture de tiroir mettant en oeuvre le procédé de fabrication de l'ensemble selon l'invention, ladite ceinture de tiroir comportant une paire de premières plaques et une paire de deuxièmes plaques.

### Brève description des dessins

L'invention sera mieux comprise à la lecture de la description qui suit de modes de réalisation de l'invention donnés à titre d'exemples non limitatifs, en référence aux dessins annexés, sur lesquels :
- la figure **1** illustre, en vue éclatée, un ensemble de montage de l'art antérieur ;
- la figure **2** illustre un premier mode de réalisation d'un ensemble de montage conforme à la présente invention, dans lequel les rainures sont usinées dans l'une des faces latérales de la deuxième plaque ;
- la figure **3** est une vue en coupe montrant la section transversale de l'une des rainures de la figure **2** **;**
- la figure **4** illustre une variante de la section transversale illustrée en figure **3** **;**
- la figure **5** illustre une variante de la figure **2****,** dans laquelle le goujon est remplacé par un tourillon ;
- la figure **6** est une vue en coupe transversal réalisée selon le plan VI-VI de la figure **5** **;**
- la figure **7** illustre un tiroir muni d'une ceinture de tiroir comportant un ensemble de montage selon l'invention ;
- la figure **8** illustre, en vue éclatée, un deuxième mode de réalisation de l'ensemble de montage selon l'invention ;
- la figure **9** illustre, en vue montée, l'ensemble de montage de la figure **8** **;** et
- les figures **10A** à **10D** illustrent le procédé de fabrication de l'ensemble de montage, notamment la réalisation de la deuxième plaque.

### Description détaillée de l'invention

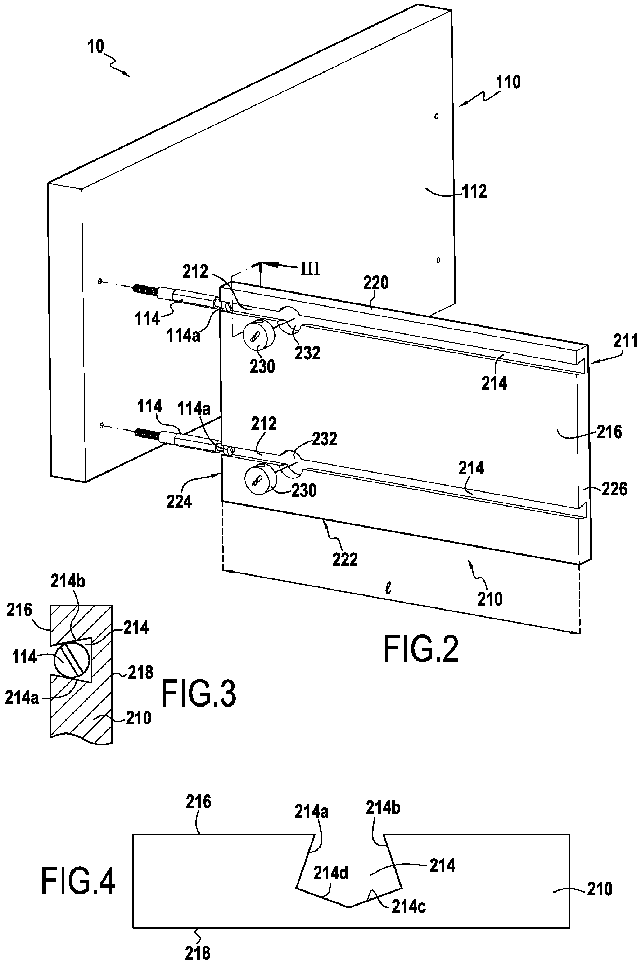

Sur la figure **2****,** on a illustré un premier mode de réalisation d'un ensemble de montage **10** conforme à la présente invention. Cet ensemble de montage **10** trouve une application particulièrement avantageuse dans la fabrication de meubles. En particulier, mais pas exclusivement, cet ensemble de montage est utilisé pour fabriquer des ceintures de tiroirs. Par ceinture de tiroir, on entend la partie du tiroir qui constitue tout ou partie de la périphérie du tiroir (hors fond).

Cet ensemble de montage **10** comprend une première plaque **110** de forme générale parallélépipédique présentant une première face **112.** Dans cet exemple, la première plaque **110** est un panneau en bois. Il pourrait s'agir également d'un panneau conçu de particules de bois, de MDF, ou de tout autre type de matériau équivalent.

Dans la première plaque **110** sont fixées une pluralité de premières tiges **114** qui font saillie perpendiculairement depuis le plan défini par la première face **112.**

Dans cet exemple, les premières tiges **114** sont des goujons qui sont fixés par vissage dans la première plaque **110** en s'étendant perpendiculairement à la première face **112.** Plus précisément, la première plaque **110** est munie de deux paires de goujons **114,** chaque paire étant disposée à l'une des extrémités longitudinales de la première plaque **110.** Chaque goujon présente une tête disposée à une extrémité longitudinale **114a** distante de la première face **112.**

L'ensemble de montage **10** comporte par ailleurs une deuxième plaque **210** qui présente une direction longitudinale **I** et qui est configurée pour être fixée perpendiculairement à la première plaque **110.** Pour ce faire, la deuxième plaque **210** comporte plusieurs logements **212** recevant les premières tiges **114** lorsque la deuxième plaque est fixée à la première plaque.

On comprend que les logements **212** de la deuxième plaque **210** sont conformés de manière que, pour fixer ensemble les première **110** et deuxième **210** plaques, l'une des plaques est déplacée selon la direction longitudinale **I.**

Conformément à l'invention, le logement **212** est constitué d'une rainure **214** qui s'étend selon la direction longitudinale **I** de la deuxième plaque **210.** Dans cet exemple, la rainure **214** s'étend sur toute la longueur **I** de la deuxième plaque **210.** Cependant, sans sortir du cadre de la présente invention, la rainure pourrait s'étendre sur une fraction de la longueur de la deuxième plaque.

On constate par ailleurs que la deuxième plaque **210** présente une première face **216,** une seconde face **218,** parallèle et opposée à la première face **216.** La deuxième plaque **210** comporte en outre un premier bord longitudinal **220,** et un deuxième bord longitudinal **222** opposé et parallèle au premier bord longitudinal **220.**

On comprend donc que l'ensemble de montage **10** est configuré de manière que, lorsque les première **110** et deuxième **210** plaques sont fixées l'une à l'autre, le plan défini par l'une ou l'autre des première **216** et seconde **218** faces de la deuxième plaque **210** est perpendiculaire au plan défini par la première face **112** de la première plaque **110.**

La deuxième plaque **210** comporte enfin un premier bord transversal **224** et un deuxième bord transversal **226,** opposé au premier bord transversal **224.** Les premier et deuxième bords longitudinaux **220,222** sont parallèles à la direction longitudinale de la deuxième plaque, tandis que les bords transversaux **224,226** sont perpendiculaires à la direction longitudinale de la deuxième plaque.

Lorsque la deuxième plaque est fixée à la première plaque, le premier bord transversal **224** de la deuxième plaque vient en appui contre la première face **112** de la première plaque **110.**

En se référant à la figure **2****,** on note que les rainures **214** débouchent dans la première face **216** de la deuxième plaque **210,** ainsi que dans le premier bord transversal **224** de la deuxième plaque **210.** Plus précisément, les rainures **214** débouchent dans la première face **216** de la deuxième plaque **210** selon la longueur de ladite deuxième plaque.

Par ailleurs, dans cet exemple, la deuxième plaque **210** présente deux rainures longitudinales distinctes et parallèles l'une à l'autre, chacune des rainures **214** recevant l'un des goujons **114** de la première plaque **110.** Il s'ensuit que la distance entre les deux rainures correspond à la distance séparant les deux goujons **114.**

On comprend par ailleurs que les deux goujons **114** s'étendent longitudinalement à l'intérieur des rainures **214.**

Pour verrouiller la première plaque à la deuxième plaque **210,** cette dernière est munie de moyens de verrouillage. En l'espèce, ces moyens sont des excentriques **230,** connus par ailleurs, qui se présentent sous la forme de pièces cylindriques qui sont logées dans des trous cylindriques **232** usinés dans la deuxième plaque **210** et communiquant avec les rainures. L'extrémité longitudinale **114a** de chacun des goujons coopère avec l'un des excentriques **230.** Ce dernier est monté rotatif dans son trou **232** afin de réaliser le verrouillage en faisant tourner l'excentrique **230** sur lui-même, par exemple d'un quart de tour. L'axe de rotation de l'excentrique est perpendiculaire aux première et seconde faces **216, 218** de la deuxième plaque.

Dans cet exemple, comme on l'a représenté sur la figure **3****,** la section transversale de la rainure **214** est légèrement plus grande que la section transversale de la première tige **114.**

Dans les exemples des figures **3** et **4****,** la section transversale de la rainure **214** présente au moins deux pans inclinés **214a, 214b** qui sont convergents vers l'extérieur de la deuxième plaque **210** de manière à réaliser un blocage transversal de la première tige **114.** Avantageusement, la distance entre les bords longitudinaux des deux pans, au niveau de la première face **216,** est plus petite que le diamètre du goujon. Cela permet de bloquer radialement le goujon à l'intérieur de la rainure **214** et, par voie de conséquence, d'empêcher un dégagement du goujon hors de son logement **212.**

Dans l'exemple de la figure **3****,** la section transversale de la rainure est trapézoïdale, tandis que dans l'exemple de la figure **4****,** la section transversale de la rainure présente une forme pentagonale. Le pentagone comporte deux autres pans inclinés **214c, 214d** contre lesquels la surface du goujon vient en appui. Cette forme pentagonale a pour effet avantageux d'améliorer le maintien du goujon à l'intérieur de la rainure.

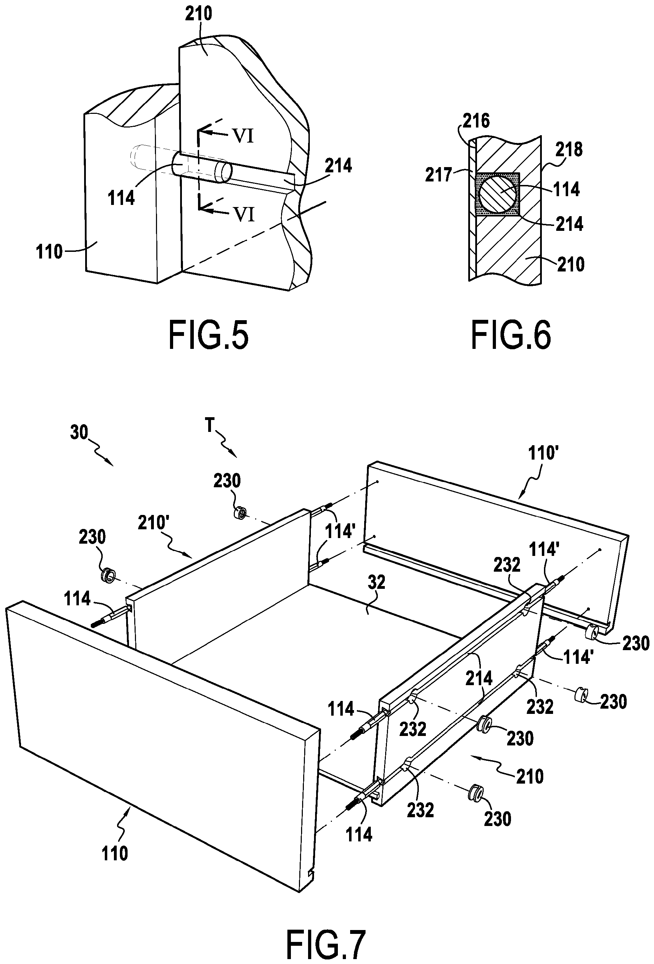

Dans la variante des figures **5** et **6****,** le goujon **114** est remplacé par un tourillon **114** qui est collé dans la rainure **214.** Dans cet exemple, la rainure **214** présente une section transversale de forme rectangulaire.

Dans ce mode de réalisation, on comprend donc que les moyens de verrouillage de l'ensemble de montage **10** comportent un matériau adhésif, tel que de la colle, disposé dans la rainure **214,** et permettant de verrouiller le tourillon **114** dans la rainure **214,** afin de réaliser un blocage de la deuxième plaque **210** par rapport à la première plaque **110** selon la direction longitudinale **I.**

Dans la variante de la figure **6****,** la première face **216** est en outre recouverte d'un parement décoratif **217.** Un tel parement décoratif, optionnel, pourrait également être utilisé sur la seconde plaque **210** du mode de réalisation de la figure **2****.**

Sur la figure **7****,** on a illustré un tiroir **T** constitué d'une ceinture de tiroir **30** comportant un ensemble de montage **10** décrit précédemment, et d'un fond **32.**

La ceinture de tiroir **30** comporte plus précisément une paire de premières plaques **110, 110'** parallèles l'une à l'autre. Dans cet exemple, la première plaque **110** constitue la façade du tiroir, tandis que l'autre première plaque **110'** constitue la partie arrière du tiroir. La ceinture **30** comporte en outre une paire de deuxièmes plaques **210, 210'** parallèles l'une à l'autre, les deuxièmes plaques constituant les flancs du tiroir. La ceinture de tiroir **30** comprend donc les premières et deuxièmes plaques qui entourent le fond **32.**

Chaque première plaque **110, 110'** est munie de quatre goujons **114,** tandis que chacune des secondes plaques **210, 210'** comporte deux rainures longitudinales **214** s'étendant selon toute la longueur desdites deuxièmes plaques. Dans cet exemple, les rainures **214** débouchent vers l'extérieur du tiroir **T.** Alternativement, le montage des plaques pourrait être inversé de sorte que les rainures **214** débouchent vers l'intérieur du tiroir **T.**

Comme on le comprend à l'aide de la figure **7****,** chacune des rainures **214** forme à la fois un logement pour recevoir un des goujons **114** de la façade **110** et l'un des goujons **114'** de la partie arrière **110'.** Dit autrement, chaque rainure **214** reçoit un goujon à chacune de ses deux extrémités longitudinales. Autrement dit, les quatre rainures usinées dans les deuxièmes plaques **210, 210'** sont suffisantes pour recevoir les huit goujons **114,114'** des deux premières plaques **110, 110'.**

Chaque deuxième plaque **210, 210'** comporte en outre quatre moyens **230** pour recevoir et verrouiller une extrémité d'un des goujons afin de réaliser le blocage des deuxièmes plaques par rapport aux premières plaques selon la direction longitudinale. Là encore, ces moyens sont constitués d'excentriques **230** venant se loger dans des trous cylindriques **232** traversés par les rainures. Dans cet exemple, on comprend que chaque rainure **214** coopère avec deux trous **232.**

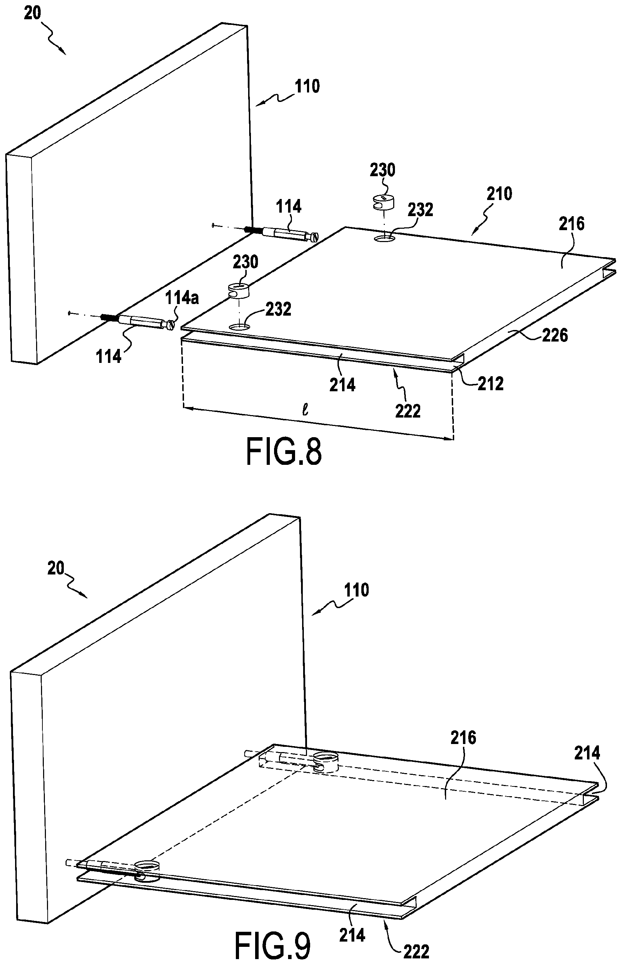

A l'aide des figures **8** et **9****,** on va maintenant décrire un deuxième mode de réalisation d'un ensemble de montage **20** conforme à la présente invention.

Ce deuxième mode de réalisation diffère du premier par le fait que les rainures **214** sont ménagées dans les bords longitudinaux **220,222** de la deuxième plaque **210,** et non plus dans l'une des faces.

Dans l'exemple des figures **8** et **9****,** des rainures **214** s'étendent également selon toute la longueur de la deuxième plaque **210.**

A l'instar du premier mode de réalisation, il est prévu des moyens pour recevoir et verrouiller une extrémité du goujon **114** afin de réaliser un blocage de la deuxième plaque par rapport à la première plaque selon la direction longitudinale **I.** Là encore, ces moyens sont constitués d'excentriques **230** qui sont reçus dans des trous **232** cylindriques et ménagés dans la face **216.** Par suite, l'excentrique **230** s'étend dans la rainure **214** de manière à recevoir l'extrémité **114a** du goujon **114.**

Aussi, dans ce deuxième mode de réalisation, l'axe de rotation de l'excentrique **230** est perpendiculaire au plan de la face de la deuxième plaque **216.**

On constate aussi sur ces figures **8** et **9** que la rainure **214** débouche dans les bords longitudinaux **220, 222,** ainsi que dans les bords transversaux **224, 226.**

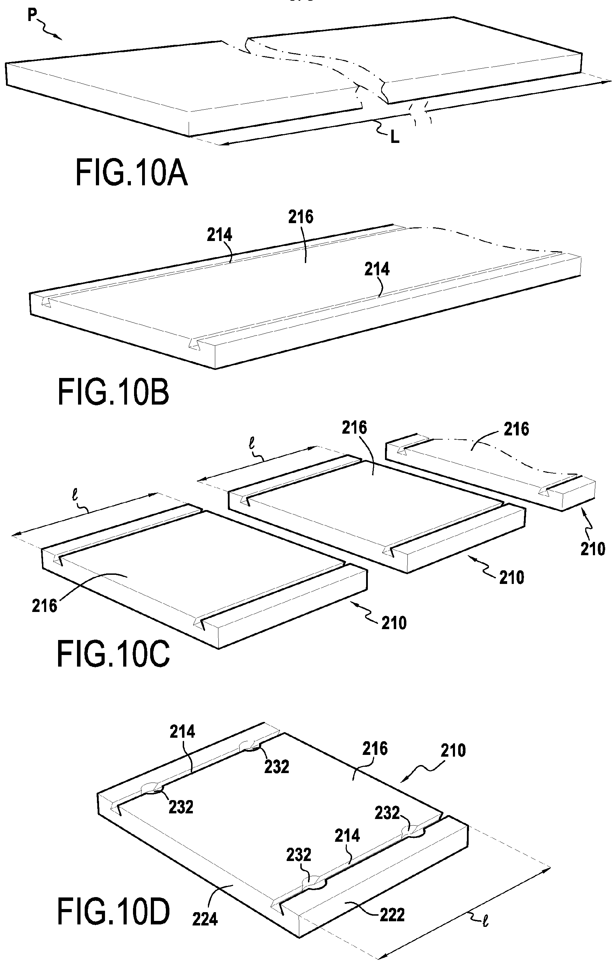

A l'aide des figures **10A** à **10D****,** on va maintenant décrire un mode de mise en oeuvre du procédé de fabrication de l'ensemble de montage **10** conforme à l'invention. Plus précisément, on va expliquer la fabrication de la deuxième plaque **210** de l'ensemble de montage **10** conforme à l'invention.

Selon l'invention, on fournit tout d'abord un panneau **P** qui s'étend selon une direction longitudinale **L.** Ce panneau est illustré sur la figure **10A****.**

Puis, comme on l'a représenté sur la figure **10B****,** on usine dans la première face **216** de ce panneau **P** deux rainures **214** qui s'étendent selon la direction longitudinale du panneau. Dans cet exemple, sont usinées deux rainures **214** parallèles dont la section transversale est trapézoïdale. Bien entendu, cette section trapézoïdale pourra être remplacée par une section de forme pentagonale ou rectangulaire sans sortir du cadre de l'invention.

Comme on l'a représenté sur la figure **10C****,** on découpe ensuite le panneau usiné selon sa direction transversale afin d'obtenir des deuxièmes plaques **210** de longueur **I.**

De préférence, on usine en outre dans la première face **216** quatre trous **232** qui communiquent avec les rainures **214** afin de recevoir un moyen de verrouillage de la première tige, en l'espèce un excentrique. Ces trous **232** débouchent également dans la première face **216.** Chaque rainure communique avec deux trous **232.**

L'usinage des trous **232** peut être effectué avant ou après les opérations de découpe transversale du panneau **P.**

La figure **10D** illustre la seconde plaque **210** de la figure **2****.**

Dans ce mode de mise en oeuvre, les rainures **214** sont usinées dans l'une des faces du panneau **P.**

Enfin, pour fabriquer la ceinture de tiroir de la figure **7****,** on met en oeuvre un procédé selon l'invention dans lequel la ceinture de tiroir **30** comporte une paire de premières plaques **110, 110'** et une paire de deuxièmes plaques **210, 210'.** Pour obtenir le tiroir **T,** on usine des fentes longitudinales dans chacune des premières et deuxièmes plaques afin de recevoir le fond **32.**

## Revendications

1. Ensemble de montage (10, 20) comprenant :
• au moins une première plaque (110, 110') munie d'au moins une première tige (114, 114') qui fait saillie perpendiculairement depuis ladite première plaque (110, 110');
• au moins une deuxième plaque (210, 210') présentant une direction longitudinale (I) ;
**caractérisé en ce que** la première tige (114, 114') est perpendiculaire à une des deux plus grandes faces de ladite première plaque (110, 110') et **en ce que** ladite deuxième plaque (210, 210') comporte au moins un logement (212) recevant la première tige (114) de manière à fixer la deuxième plaque perpendiculairement à la première plaque (110), le logement (212) étant constitué d'une rainure (214) s'étendant selon la direction longitudinale (I) de la deuxième plaque (210, 210'), la deuxième plaque comportant au moins un trou débouchant dans la rainure, le trou recevant un moyen (230, 232) pour recevoir et verrouiller une extrémité (114a) de la première tige (114) en sorte de bloquer la deuxième plaque par rapport à la première plaque selon la direction longitudinale.

2. Ensemble de montage selon la revendication **1, caractérisé en ce que** la rainure (214) s'étend sur toute la longueur (I) de la deuxième plaque (210, 210').

3. Ensemble de montage selon la revendication **1** ou **2, caractérisé en ce que** la section transversale de la rainure (214) est sensiblement égale ou légèrement plus grande que la section transversale de la première tige (114,114').

4. Ensemble de montage selon l'une quelconque des revendications **1 à 3, caractérisé en ce que** la section transversale de la rainure (214) est rectangulaire.

5. Ensemble de montage selon l'une quelconque des revendications **1 à 3, caractérisé en ce que** la section transversale de la rainure (214) présente au moins deux pans inclinés (214a, 214b) convergents vers l'extérieur de la deuxième plaque (210, 210') de manière à réaliser un blocage transversal de la première tige (114, 114').

6. Ensemble de montage selon la revendication **5, caractérisé en ce que** la section transversale de la rainure (214) présente une forme pentagonale.

7. Ensemble de montage selon l'une quelconque des revendications **1 à 6, caractérisé en ce que** la première tige (114, 114') est un goujon (114, 114').

8. Ensemble de montage selon l'une quelconque des revendications **1 à 7, caractérisé en ce que** la deuxième plaque (210, 210') présente une première face (216), une seconde face (218) opposée à la première face, et au moins un bord longitudinal (220, 222), et **en ce que** la rainure (214) est usinée dans la première face, la seconde face et/ou le bord longitudinal.

9. Ensemble de montage selon la revendication **8, caractérisé en ce que** la première face (216), la seconde face (218) ou le bord longitudinal (220, 222) dans lequel est usinée la rainure est recouvert d'un parement décoratif (217).

10. Ensemble de montage selon l'une quelconque des revendications **1 à 9, caractérisé en ce que** la première plaque est munie en outre d'une deuxième tige (114), et **en ce que** la première plaque présente deux rainures (214) dans lesquelles sont engagées les première et deuxième tiges.

11. Ceinture de tiroir (30) comportant un ensemble de montage (10) selon l'une quelconque des revendications **1 à 10.**

12. Procédé de fabrication d'un ensemble de montage (10) selon l'une quelconque des revendications **1 à 10,** dans lequel, pour fabriquer la deuxième plaque (210), on procède de la façon suivante :
• on fournit un panneau (P) s'étendant selon une direction longitudinale (L) ;
• on usine dans le panneau (P) au moins une rainure (214) s'étendant selon la direction longitudinale (L) dudit panneau ;
• on réalise au moins une découpe transversale du panneau usiné afin d'obtenir la deuxième plaque.

13. Procédé de fabrication selon la revendication **12, caractérisé en ce que** l'on usine en outre au moins un trou (230) dans l'une des faces de la deuxième plaque, ledit trou débouchant dans ladite rainure afin de recevoir un moyen de verrouillage de la première tige.

14. Procédé de fabrication selon l'une quelconque des revendications **12 à 13,** dans lequel la rainure est usinée dans l'une des faces du panneau (P), ou bien dans l'un des bords longitudinaux du panneau (P).

15. Procédé de fabrication d'une ceinture de tiroir mettant en oeuvre le procédé selon l'une quelconque des revendications **12 à 14,** ladite ceinture de tiroir (30) comportant une paire de premières plaques (110, 110') et une paire de deuxièmes plaques (210, 210').

## Patentansprüche

1. Montageeinheit (10, 20), umfassend:
- mindestens eine erste Platte (110, 110'), die mit mindestens einer ersten Stange (114, 114') versehen ist, die senkrecht aus der ersten Platte (110, 110') herausragt,
- mindestens eine zweite Platte (210, 210'), die eine Längsrichtung (I) aufweist,
**dadurch gekennzeichnet, dass** die erste Stange (114, 114') rechtwinklig zu einer der beiden größeren Seiten der ersten Platte (110, 110') verläuft, und dass die zweite Platte (210, 210') mindestens eine Aufnahme (212) umfasst, die die erste Stange (114) aufnimmt, um die zweite Platte rechtwinklig zur ersten Platte (110) zu befestigen, wobei die Aufnahme (212) von einer Nut (214) gebildet ist, die sich in Längsrichtung (I) der zweiten Platte (210, 210') erstreckt, wobei die zweite Platte mindestens ein in die Nut mündendes Loch umfasst, wobei das Loch ein Mittel (230, 232) aufnimmt, um ein Ende (114a) der ersten Stange (114) aufzunehmen und zu verriegeln, um die zweite Platte in Bezug zur ersten Platte in Längsrichtung festzustellen.

2. Montageeinheit gemäß Anspruch 1, **dadurch gekennzeichnet, dass** sich die Nut (214) über die gesamte Länge (I) der zweiten Platte (210, 210') erstreckt.

3. Montageeinheit gemäß Anspruch 1 oder 2, **dadurch gekennzeichnet, dass** der Querabschnitt der Nut (214) im Wesentlichen gleich oder etwas größer als der Querabschnitt der ersten Stange (114, 114') ist.

4. Montageeinheit gemäß einem der Ansprüche 1 bis 3, **dadurch gekennzeichnet, dass** der Querschnitt der Nut (214) rechteckig ist.

5. Montageeinheit gemäß einem der Ansprüche 1 bis 3, **dadurch gekennzeichnet, dass** der Querschnitt der Nut (214) mindestens zwei geneigte Flächen (214a, 214b) aufweist, die zum Äußeren der zweiten Platte (210, 210') konvergierend sind, um eine Querfeststellung der ersten Stange (114, 114') zu bewirken.

6. Montageeinheit gemäß Anspruch 5, **dadurch gekennzeichnet, dass** der Querschnitt der Nut (214) eine fünfeckige Form aufweist.

7. Montageeinheit gemäß einem der Ansprüche 1 bis 6, **dadurch gekennzeichnet, dass** die erste Stange (114, 114') ein Dorn (114, 114') ist.

8. Montageeinheit gemäß einem der Ansprüche 1 bis 7, **dadurch gekennzeichnet, dass** die zweite Platte (210, 210') eine erste Seite (216), eine zweite Seite (218) gegenüber der ersten Seite und mindestens einen Längsrand (220, 222) aufweist, und dass die Nut (214) in der ersten Seite, der zweiten Seite und/oder dem Längsrand eingearbeitet ist.

9. Montageeinheit gemäß Anspruch 8, **dadurch gekennzeichnet, dass** die erste Seite (216), die zweite Seite (218) oder der Längsrand (220, 222), in dem die Nut eingearbeitet ist, mit einer Dekorverkleidung (217) überzogen ist.

10. Montageeinheit gemäß einem der Ansprüche 1 bis 9, **dadurch gekennzeichnet, dass** die erste Platte ferner mit einer zweiten Stange (114) versehen ist, und dass die erste Platte zwei Nuten (214) aufweist, in denen die erste und zweite Stange in Eingriff sind.

11. Schubladenrahmen (30), umfassend eine Montageeinheit (10) gemäß einem der Ansprüche 1 bis 10.

12. Verfahren zur Herstellung einer Montageeinheit (10) gemäß einem der Ansprüche 1 bis 10, bei dem für die Herstellung der zweiten Platte (210) folgendermaßen vorgegangen wird:
- Bereitstellen einer Platte (P), die sich in eine Längsrichtung (L) erstreckt,
- Einarbeiten in die Platte (P) mindestens einer Nut (214), die sich in Längsrichtung (L) der Platte erstreckt,
- Durchführen mindestens eines Querausschnitts der bearbeiteten Platte, um die zweite Platte zu erhalten.

13. Herstellungsverfahren gemäß Anspruch 12, **dadurch gekennzeichnet, dass** ferner mindestens ein Loch (230) in eine der Seiten der zweiten Platte eingearbeitet wird, wobei das Loch in die Nut mündet, um ein Verriegelungsmittel der ersten Stange aufzunehmen.

14. Herstellungsverfahren gemäß einem der Ansprüche 12 bis 13, bei dem die Nut in eine der Seiten der Platte (P) oder in einen der Längsränder der Platte (P) eingearbeitet ist.

15. Verfahren zur Herstellung eines Schubladenrahmens, das das Verfahren gemäß einem der Ansprüche 12 bis 14 einsetzt, wobei der Schubladenrahmen (30) ein Paar von ersten Platten (110, 110') und ein Paar von zweiten Platten (210, 210') umfasst.

## Claims

1. A mounting assembly (10, 20), comprising:
• at least one first plate (110, 110') provided with at least one first rod (114, 114') that protrudes perpendicularly from said first plate (110, 110');
• at least one second plate (210, 210') having a longitudinal direction (I) ;
**characterized in that** the first rod (114, 114') is perpendicular to one of the two larger faces of said first plate (110, 110') and **in that** said second plate (210, 210') includes at least one housing (212) receiving the first rod (114) so as to fasten the second plate perpendicularly to the first plate (110), the housing (212) being made up of a slot (214) extending along the longitudinal direction (I) of the second plate (210, 210'), the second plate including at least one hole emerging in the slot, the hole receiving a means (230, 232) for receiving and locking an end (114a) of the first rod (114) so as to block the second plate relative to the first plate in the longitudinal direction.

2. The mounting assembly according to claim **1, characterized in that** the slot (214) extends over the entire length (I) of the second plate (210, 210').

3. The mounting assembly according to claim **1** or **2, characterized in that** the cross-section of the slot (214) is substantially equal to or slightly larger than the cross-section of the first rod (114, 114').

4. The mounting assembly according to any one of claims **1 to 3, characterized in that** the cross-section of the slot (214) is rectangular.

5. The mounting assembly according to any one of claims **1 to 3, characterized in that** the cross-section of the slot (214) has at least two inclined faces (214a, 214b) converging toward the outside of the second plate (210, 210') so as to produce transverse blocking of the first rod (114, 114').

6. The mounting assembly according to claim **5, characterized in that** the cross-section of the slot (214) has a pentagonal shape.

7. The mounting assembly according to any one of claims **1 to 6, characterized in that** the first rod (114, 114') is a stud (114, 114').

8. The mounting assembly according to any one of claims **1 to 7, characterized in that** the second plate (210, 210') has a first face (216), a second face (218) opposite the first face, and at least one longitudinal edge (220, 222), and **in that** the slot (214) is machined in the first face, the second face and/or the longitudinal edge.

9. The mounting assembly according to claim **8, characterized in that** the first face (216), the second face (218) or the longitudinal edge (220, 222) in which the slot is machined is covered by a decorative facing (217).

10. The mounting assembly according to any one of claims **1 to 9, characterized in that** the first plate is further provided with a second rod (114), and **in that** the first plate has two slots (214) in which the first and second rods are engaged.

11. A drawer frame (30) including a mounting assembly (10) according to any one of claims **1 to 10.**

12. A method for manufacturing a mounting assembly (10) according to any one of claims **1 to 10,** wherein, to manufacture the second plate (210), the following approach is used:
• a panel (P) is provided extending along a longitudinal direction (L);
• at least one slot (214) extending along the longitudinal direction (L) of the panel (P) is machined in said panel;
• at least one transverse cutout of the machined panel is done in order to obtain the second plate.

13. The manufacturing method according to claim **12, characterized in that** at least one hole (230) is further machined in one of the faces of the second plate, said hole emerging in said slot in order to receive locking means for the first rod.

14. The manufacturing method according to any one of claims **12 to 13,** wherein the slot is machined in one of the faces of the panel (P), or in one of the longitudinal edges of the panel (P).

15. A method for manufacturing a drawer frame implementing the method according to any one of claims **12 to 14,** said drawer frame (30) including a pair of first plates (110, 110') and a pair of second plates (210, 210').
